# EUROPÄISCHE PATENTSCHRIFT

(11) **EP 3 056 334 B1**
(45) Veröffentlichungstag und Bekanntmachung des Hinweises auf die Patenterteilung: **13.06.2018**
(21) Anmeldenummer: 15200867.8
(22) Anmeldetag: 17.12.2015
(51) Int. Cl.: B29D 30/42, B29D 30/46, B29D 30/00, B65H 23/32, B65H 20/32

(54) **EINRICHTUNG ZUR BEARBEITUNG EINES KLEBRIGEN BANDES, INSBESONDERE EINES STAHL- ODER TEXTILCORDBANDES**
DEVICE FOR MACHINING AN ADHESIVE STRIP, IN PARTICULAR A STEEL OR TEXTILE CORD STRIP
DISPOSITIF DE TRAITEMENT D'UNE BANDE COLLANTE, EN PARTICULIER UNE BANDE DE TEXTILE OU D'ACIER

(30) Priorität: 12.02.2015 DE 202015100677 U
(43) Veröffentlichungstag der Anmeldung: 17.08.2016
(73) Patentinhaber: Karl Eugen Fischer GmbH, 96224 Burgkunstadt (DE)
(72) Erfinder: KLENNER, Ralf, 96272 Hochstadt (DE)
(74) Vertreter: Lindner Blaumeier Patent- und Rechtsanwälte

(56) Entgegenhaltungen:
- EP-A2- 0 771 643
- DE-A1- 19 502 850
- DE-A1-102012 206 502
- DE-U1-202014 101 731
- DE-U1-202014 105 737
- JP-A- 2004 018 187
- JP-A- 2005 247 500

## Beschreibung

Die Erfindung betrifft eine Einrichtung zur Bearbeitung eines klebrigen Bandes, insbesondere eines Stahl- oder Textilcordbandes, umfassend
- eine Abwickelvorrichtung zum Abwickeln des auf eine Rolle gewickelten Bandes,
- eine dieser nachgeschaltete Schneideinrichtung zum Schneiden einzelner Bandabschnitte, in die das von der Abwickelvorrichtung kommende Band gefördert wird, wobei zur Veränderung des Schneidwinkels die Abwickelvorrichtung relativ zur Schneideinrichtung verschwenkbar ist,
- eine der Schneideinrichtung nachgeschaltete Transportstrecke,
- eine der Transportstrecke nachgeschaltete Spleißeinrichtung zum Verspleißen der von der Schneideinrichtung über die Transportstrecke herangeförderten Bandabschnitte zur Bildung eines Endlosbandes,
- eine der Spleißeinrichtung nachgeschaltete Transportstrecke,
- sowie wenigstens eine Bandbearbeitungseinrichtung zum weiteren Bearbeiten des Endlosbandes.

Eine solche Einrichtung dient zur Herstellung von üblicherweise in der Reifenindustrie benötigten Endlosbändern aus einem klebrigen Cordband, üblicherweise Stahl- oder Textilcord, das noch unvulkanisiert ist. Das Band ist auf eine Rolle gewickelt und wird mit der Rolle in eine Abwickelvorrichtung eingebracht. Von dieser gelangt es zu einer nachgeschalteten Schneideinrichtung, wo einzelne Bandabschnitte von dem Endlosband abgeschnitten werden. Der Schnitt erfolgt unter einem definierten Winkel relativ zur Bandlängsachse, wobei dieser Winkel dadurch veränderbar ist, dass die Abwickelvorrichtung bezüglich der Schneideinrichtung verschwenkbar ist. Das heißt, dass die Bandlängsrichtung und damit die Förderrichtung relativ zur feststehenden Schneidlinie verändert, also verschwenkt werden kann. Hierüber kann zwangsläufig der Winkel des Schnitts geändert werden.

Die geschnittenen Bandabschnitten werden über eine Transportstrecke einer Spleißeinrichtung nachgeschaltet, in der sie in entlang ihrer ursprünglichen, unbeschnittenen Bandkanten miteinander verspleißt werden, also fest miteinander verbunden werden, so dass in der Spleißeinrichtung ein Endlosband gebildet wird. Dieses wird über eine Transportstrecke zu wenigstens einer weiteren, der Bearbeitung des Endlosbandes dienenden Bandbearbeitungseinrichtung gefördert. Im einfachsten Fall ist eine solche Bandbearbeitungseinrichtung eine Aufwickelvorrichtung, in der das Endlosband wieder auf eine Rolle aufgewickelt wird, um es abzutransportieren respektive der weiteren Bearbeitung zuzuführen. Es können aber auch noch andere Bandbearbeitungseinrichtungen vor eine solche Aufwickelvorrichtung geschaltet sein. Denkbar ist es, der Spleißeinrichtung beispielsweise eine Beruhigungsrolle und/oder einen Slitter, der das Endlosband in zwei oder mehr Endlosteilbänder auftrennt, oder eine Belegevorrichtung, in der das Endlosband oder die Endlosteilbänder ober- und/oder unterseitig mit zusätzlichen Streifen belegt werden können, vorzuschalten. Die konkrete Konzeptionierung der Einrichtung in Bezug auf die der Spleißeinrichtung respektive deren nachgeschalteter Transportstrecke folgenden Bandbearbeitungseinrichtungen hängt vom konkreten Einsatz der Einrichtung ab.

Wie beschrieben ist es bei derartigen Einrichtungen, die insbesondere der Herstellung der beschriebenen Gürtelstreifen, häufig auch "breaker" genannt, dienen, erforderlich, die Abwickelvorrichtung relativ zur Schneideinrichtung zu verschwenken. Das heißt, dass die Bandlängsrichtung respektive die Förderrichtung des abgewickelten Bandes relativ zur Förderrichtung der nachfolgenden Transportstrecken verändert wird. Diese Winkelverstellung erstreckt sich über einen relativ großen Winkelbereich. Ein typischer Verstellbereich liegt zwischen 10 - 80° des Winkels, den die Bandlängsrichtung relativ zur Schnittebene einnimmt. Da die Abwickelvorrichtung wie ausgeführt die auf großen Umfang gewickelte Rolle aufnehmen muss sowie natürlich eine entsprechende Materialunterstützung etc. aufweist, da das Band ja abzuwickeln und entsprechend zu führen ist, baut die Abwickelvorrichtung in der Länge beachtlich auf, ihre Länge beträgt je nach Auslegung ca. 3 - 5 m. Da die Abwickelvorrichtung relativ weit ausschwenkbar ist, um einen Winkel von beispielsweise maximal 80° relativ zur Schnittebene einzunehmen, ist seitlich der gesamten Einrichtung relativ viel Freiraum vorzuhalten, damit die Aufwickelvorrichtung entsprechend verschwenkt werden kann. Dies führt dazu, dass in diesem Raum seitlich der Einrichtung, die, nachdem ihre Komponenten hintereinander angeordnet sind, entsprechend lang ist, ein relativ großer Raum ungenutzt verbleibt. Auch ist die Einrichtung wie beschrieben relativ lang, wobei die Länge natürlich mit der Integration von mehreren Bandbearbeitungseinrichtungen entsprechend zunimmt. Dies führt dazu, dass betreiberseitig in der Betriebshalle ein beachtlicher Raum benötigt wird, andererseits aber auch ungenutzt Die Gebrauchsmusterschrift DE 20 2014 105 737 U1 offenbart eine Einrichtung zur Bearbeitung eines klebrigen Bandes mit den Merkmalen des Oberbegriffs von Anspruch 1.

Eine weitere Transportstrecke für ein gummiertes Band ist in der Gebrauchsmusterschrift DE 20 2014 101 731 U1 offenbart.

Der Erfindung liegt damit das Problem zugrunde, eine Einrichtung anzugeben, die demgegenüber verbessert ist.

Zur Lösung dieses Problems ist bei einer Einrichtung der eingangs genannten Art erfindungsgemäß vorgesehen, dass wenigstens eine der wenigstens einen Bandbearbeitungseinrichtung vorgeschaltet Bandumlenk- und -fördereinrichtung vorgesehen ist, in der das Endlosband in eine zweite Förderrichtung, die-bezogen auf die Horitontalebene- unter einem Winkel von wenigstens 90° zur Förderrichtung der beiden Transportstrecken steht, umlenkbar und in der zweiten Förderrichtung transportierbar ist, wobei die Bandumlenk- und -fördereinrichtung als eine in die zweite Förderrichtung fördernde Transportstrecke in Form eines umlaufenden Endlosförderbandes ausgebildet ist oder eine solche umfasst, die unter einem Winkel zur ersten Förderrichtung angeordnet ist.

Bei der erfindungsgemäßen Einrichtung ist der lineare Aufbau, das heißt die Hintereinanderanordnung der Einrichtungskomponenten aufgelöst. Dies geschieht, indem erfindungsgemäß eine Bandumlenk- und -fördereinrichtung vorgesehen ist, die der wenigstens einen Bandbearbeitungseinrichtung vorgeschaltet ist. In dieser Bandumlenk- und -fördereinrichtung wird das zuvor in der Spleißeinrichtung erzeugte Endlosband in eine zweite Förderreinrichtung umgelenkt. Diese zweite Förderreinrichtung steht unter einem Winkel von wenigstens 90°, vorzugsweise mehr, bis zu maximal 145° relativ zur Förderrichtung der ersten und zweiten Transportstrecke, die linear hintereinander angeordnet sind und folglich die identische Förderrichtung haben. Aufgrund der Umlenkung um 90° und mehr wird das Band also zur Seite oder, bei einem Umlenkwinkel von mehr als 90°, sogar quasi zurückgeführt, und zwar in einen Bereich, der bis dato seitlich neben der Einrichtung ungenutzt verblieb. In diesem Bereich kann nun beispielsweise die wenigstens eine Bandbearbeitungseinrichtung angeordnet werden.

Die erfindungsgemäße Einrichtung ist wesentlich kompakter ausgeführt, sie nutzt den gegebenen Raum wesentlich besser aus und ermöglicht es insbesondere auch die Gesamtlänge der Einrichtung zu reduzieren. Denn die Einrichtungskomponenten sind wie beschrieben nicht mehr sämtlich linear hintereinander angeordnet, beginnend von der Schneideinrichtung bis zur letzten Bandbearbeitungseinrichtung, wie dies bisher der Fall war. Vielmehr ist ein Teil der Komponenten, nämlich die eine oder die mehreren Bandbearbeitungseinrichtungen, seitlich versetzt positioniert. Sie werden über die Bandumlenk- und -fördereinrichtung bedient.

Die Bandumlenk- und -fördereinrichtung ist bevorzugt zum Umlenken des Endlosbandes derart ausgebildet, dass das Endlosband sowohl hinsichtlich der Förderrichtung umgelenkt als auch um 180° um die Bandlängsachse gedreht wird. Das heißt, dass die vorherige Unterseite zur Oberseite wird und umgekehrt. Dies ist insbesondere dann von Vorteil, wenn als eine weitere Bandbearbeitungseinrichtung unter anderem eine Belegevorrichtung, mit der ein oder mehrere Belegestreifen auf die originäre Bandunterseite aufgebracht werden sollen, vorgesehen ist. Denn es ist leichter, solche Belegestreifen auf die Oberseite eines Bandes aufzubringen. Das heißt, dass das Umlenken des Endlosbandes durch "Auskreuzen" des Endlosbandes erfolgt. Die Oberseite des Bandes liegt nach dem Umlenken unten auf der Bandumlenk- und - fördereinrichtung und wird zur Unterseite.

Die Bandumlenk- und -fördereinrichtung ist als eine in die zweite Förderrichtung fördernde Transportstrecke ausgebildet oder umfasst eine solche, wobei die Transportstrecke unter einem Winkel zur ersten Fördereinrichtung angeordnet ist. Es sind zwei unterschiedliche Ausgestaltungen denkbar. In einer ersten Ausbildung kann die Bandumlenk- und -fördereinrichtung insgesamt als Transportstrecke ausgebildet sein, beispielsweise als Endlosförderband oder als Rollengang oder ähnliches, wobei die Transportstrecke eine separate Antriebseinrichtung aufweist, folglich also das Endlosband aktiv fördert. Die Transportstrecke ist unter einem entsprechenden Winkel zur ersten Förderrichtung angeordnet, wobei dieser Winkel natürlich dem Umlenkwinkel entspricht. Das Endlosband läuft also von der vorgeschalteten Bandbearbeitungseinrichtung oder Transporteinrichtung etc. über eine entsprechende Freistrecke, die zum Auskreuzen erforderlich ist, auf die Bandumlenk- und -fördereinrichtung, auf der es dann weiter transportiert wird. Ein Auskreuzen ist nicht zwingend erforderlich, insbesondere wenn der Umlenkwinkel nur 90° oder etwas mehr beträgt.

Alternativ kann die Bandumlenk- und -fördereinrichtung auch eine Art Rollenkaskade umfassen, der ein Transportband nachgeschaltet ist. Auf diese Rollenkaskade läuft das Transportband auf. Die Rollenkaskade kann mehrere angetriebene oder nicht angetriebene Rollen umfassen, die beispielsweise nach Art einer Helix angeordnet sind, also sich im jeweiligen Anstellwinkel unterscheiden, so dass das Band auflaufend geführt und so dann über die unterschiedlich angestellten Rollen in die gewünschte Richtung und Bandstellung umgelenkt wird. Sodann läuft das Endlosband auf die Transportstrecke auf, über die es aktiv gefördert wird.

Bevorzugt läuft das Endlosband aus einem Bandspeicher frei hängend auf die Bandumlenk- und -fördereinrichtung auf. Erfolgt ein Auskreuzen, also eine Banddrehung um 180°, so wird hierfür eine entsprechende Bandstrecke benötigt, in welcher das Endlosband frei hängt. Eine solche Bandstrecke ist bevorzugt über einen Bandspeicher realisiert, der der Bandumlenk- und -fördereinrichtung vorgeschaltet ist. In diesem Bandspeicher hängt das Band bevorzugt frei, das heißt, der Bandspeicher ist beispielsweis als bodenseitige Grube ausgeführt, in die das Endlosband zunächst einläuft und aus der es auf die Bandumlenk- und - fördereinrichtung aufläuft. Einerseits ist auf diese Weise eine hinreichende Bandstrecke gegeben, die ein Auskreuzen ermöglicht, andererseits ist gleichzeitig ein Bandspeicher als Puffer realisiert, der ohne Probleme wechselnd befüllt und entleert werden kann.

Weiterhin ist es zweckmäßig wenn die Bandumlenk- und -fördereinrichtung erhöht relativ zu den vorgeschalteten Transportstrecken angeordnet ist. Einerseits kann durch eine erhöhte Anordnung wieder Bandstrecke zum Auskreuzen gewonnen werden. Andererseits bietet die erhöhte Anordnung die Möglichkeit, unterhalb der Bandumlenk- und -fördereinrichtung hindurch zu gehen, das heißt, dass die einzelnen Einrichtungskomponenten besser zugänglich sind.

Wie beschrieben steht die zweite Fördereinrichtung bevorzugt unter einem Winkel von 90° - 145° zur ersten Förderrichtung. Je größer der Winkel ist, umso steiler wird das Endlosband zurückgeführt.

Gemäß einer ersten Erfindungsalternative kann die wenigstens eine Bandbearbeitungseinrichtung direkt der Bandumlenk- und -fördereinrichtung nachgeschaltet sein. Das heißt, dass sich gemäß dieser Erfindungsausgestaltung in der zweiten Förderrichtung wieder ein linearer Aufbau ergibt, also die eine oder die mehreren Bandbearbeitungseinrichtungen linear der Bandumlenk- und - fördereinrichtung folgen. Beispielsweise ist der Bandumlenk- und - fördereinrichtung ein Slitter, diesem eine Belegevorrichtung zum Belegen der vom Slitter kommenden mehreren Endlosteilbänder, sowie eine entsprechende Anzahl an Aufwickelvorrichtungen nachgeschaltet. Ist kein Slitter vorgesehen, so kann nur eine Belegevorrichtung und eine Aufwickelvorrichtung vorgesehen sein, wie auch, wenn kein Bedarf, nur eine Aufwickelvorrichtung folgt.

Eine alternative Erfindungsausgestaltung sieht demgegenüber vor, einen zweiten Umlenkpunkt zu realisieren, über den das Endlosband ein zweites Mal umgelenkt wird und anschließend in eine dritte Fördereinrichtung läuft. Das heißt, dass die wenigstens eine Bandbearbeitungseinrichtung derart versetzt zur zweiten Förderrichtung respektive der Bandumlenk- und -fördereinrichtung angeordnet ist, dass das auf der Bandumlenk- und -fördereinrichtung geförderte Endlosband in eine vorzugsweise parallel zur ersten Fördereinrichtung verlaufende dritte Fördereinrichtung umzulenken ist. Ein solcher Umlenkpunkt ist in diesem Fall direkt am Ende der Bandumlenk- und -fördereinrichtung, also am Ende der Transportstrecke vorgesehen. Das Endlosband läuft von dieser Transportstrecke ab, es ist lediglich sicherzustellen, dass eine hinreichende Bandstrecke gegeben ist, die ein erneutes Umlenken respektive insbesondere Auskreuzen ermöglicht. Im zweiten Umlenkpunkt besteht die Möglichkeit, die Bandorientierung wieder um 180° zu drehen, so dass die originäre Oberseite wieder die Oberseite bildet. Nach diesem Umlenkpunkt läuft das Endlosband zur Bandbearbeitungseinrichtung, beispielsweise ein Slitter gefolgt von einer Belegevorrichtung und einer Aufwickelvorrichtung, oder eine Belegevorrichtung gefolgt von einer Aufwickelvorrichtung, oder nur die Aufwickelvorrichtung.

Nach einer dritten Alternativausführung kann der Bandumlenk- und - fördereinrichtung eine oder mehrere Bandbearbeitungseinrichtungen nachgeschaltet sein, wobei der oder der letzten Bandbearbeitungseinrichtung eine zweite Bandumlenk- und -fördereinrichtung nachgeschaltet ist, die das Endlosband in eine parallel zur ersten Förderrichtung verlaufende dritte Förderrichtung, in der linear wenigstens eine weitere Bandbearbeitungseinrichtung angeordnet ist, umlenkt. Hier ist also quasi eine teillineare Anordnung einer oder mehrere Bandbearbeitungseinrichtungen zur ersten Bandumlenk- und - fördereinrichtung gegeben. Der einen oder der letzten Bandbearbeitungseinrichtung schließt sich ein zweiter Umlenkpunkt an, es ist also eine zweite Bandumlenk- und -fördereinrichtung vorgesehen. Diese zweite Bandumlenk- und -fördereinrichtung kann letztlich im einfachsten Fall durch eine kurze Transportstrecke, die der letzten Bandbearbeitungseinrichtung zugeordnet ist oder nachgeschaltet ist, gebildet sein. Von dieser läuft das Endlosband wiederum über eine entsprechende Bandstrecke, die ein Auskreuzen, wenn vorgesehen, ermöglicht, zur nächsten, dann bereits in der dritten Förderrichtung angeordneten Bandbearbeitungseinrichtung, wo das Band weiter prozessiert wird. Denkbar ist es beispielsweise der ersten Bandumlenk- und -fördereinrichtung eine Belegevorrichtung nachzuschalten. Diese ist zweckmäßig, wenn eigentlich die Bandunterseite beleget werden soll, nachdem, wenn ein Auskreuzen vorgesehen ist, die ursprüngliche Bandunterseite nunmehr die Oberseite bildet. Das Belegen von oben ist einfacher als das Belegen von unten. Es schließt sich der zweite Anlenkpunkt an, dem, dann bereits in der dritten Förderrichtung, eine weitere Belegevorrichtung folgen kann, die nun, erneut von oben, die originäre Oberseite belegt. Anschließend kann, linear in der dritten Fördereinrichtung, die Aufwickelvorrichtung mit zugeordneter Transportstrecke oder dergleichen folgen.

Zweckmäßig ist es insbesondere in Bezug auf die vorbeschriebenen zweite und dritte Alternative, einen Bandspeicher vorzusehen, in den das Endlosband vor der zuletzt angeordneten Bandbearbeitungseinrichtung frei hängenden einläuft und aus dem es umgelenkt zur Bandbearbeitungseinrichtung läuft. Dieser Bandspeicher, beispielsweise wiederum in Form einer Grube, schafft eine hinreichende Bandstrecke, die ein Auskreuzen ohne weiteres ermöglicht.

Ist eine zweite Bandumlenk- und -fördereinrichtung vorgesehen, insbesondere wenn diese in Form einer separaten Transportstrecke ausgeführt ist, so kann auch diese bevorzugt erhöht relativ zu den vorgeschalteten, in der ersten Förderrichtung liegenden Transportstrecken angeordnet sein. Das heißt, dass auch hier das Transportband oder dergleichen erhöht verläuft, so dass andere Einrichtungskomponenten ohne weiteres zugänglich sind. Selbstverständlich kann auch der zweiten Bandumlenk- und -fördereinrichtung zusätzlich eine Rollenkaskade, wie sie bereits bezüglich der ersten Bandumlenk- und - fördereinrichtung beschrieben ist, zugeordnet sein, in diesem Fall am Ende, das heißt, dass das Endlosband von dieser Rollenkaskade ausläuft.

Kommt es am ersten Umlenkpunkt zu einer Banddrehung um 180°, so ist bevorzugt auch im zweiten Umlenkpunkt eine 180°-Banddrehung vorgesehen, das heißt, dass die Bandbearbeitungseinrichtung derart angeordnet ist, dass das Endlosband nicht nur in der Förderrichtung umzulenken ist, sondern auch um seine Bandlängsachse zu drehen ist, so dass die originäre Oberseite nach dem zweiten Umlenkpunkt wieder die Oberseite bildet.

Wie bereits beschrieben sind unterschiedliche Bandbearbeitungseinrichtungen integrierbar. Als Bandbearbeitungseinrichtung oder als weitere Bandbearbeitungseinrichtung kann eine das Endlosband aufwickelnde Aufwickelvorrichtung vorgesehen sein, in der das gespleißte Endlosband wieder auf Rolle gewickelt wird. Eine solche Aufwickelvorrichtung ist letztlich immer vorzusehen, wenn das Endlosband weiter transportiert und später anderswo weiterverarbeitet werden soll.

Die Bandbearbeitungseinrichtung kann ferner als Belegeeinrichtung zum Aufbringen eines oder mehrerer Belegestreifen auf eine Seite des Endlosbandes vorgesehen sein.

Schließlich kann die Bandbearbeitungseinrichtung auch als Slitter zum Längsteil des Endlosbandes in zwei oder mehr Endlosbandabschnitte ausgeführt sein.

Weitere Vorteile und Einzelheiten der Erfindung ergeben sich aus dem im Folgenden beschriebenen Ausführungsbeispiel sowie anhand der Zeichnungen. Dabei zeigen:
- Figur 1: eine Prinzipdarstellung einer Einrichtung gemäß Stands der Technik,
- Figur 2: eine Prinzipdarstellung einer erfindungsgemäßen Einrichtung einer ersten Ausführungsform,
- Figur 3: eine Detailansicht des Einrichtungsbereichs im Übergang zur Bandumlenk- und -fördereinrichtung,
- Figur 4: eine Teilansicht der Einrichtung in Übergang zur Bandumlenk- und - fördereinrichtung mit zusätzlich integriertem Reparaturband,
- Figur 5: eine Teilansicht der erfindungsgemäßen Einrichtung im Übergangsbereich zur Bandumlenk- und -fördereinrichtung mit zusätzlich integrierter Beruhigungsrolle,
- Figur 6: eine Seitenansicht der Bandumlenk- und -fördereinrichtung,
- Figur 7: eine Teilansicht der erfindungsgemäßen Einrichtung im Bereich des zweiten Umlenkpunktes im Übergang von der Bandumlenk- und - fördereinrichtung zu einer nachgeschalteten Bandbearbeitungskomponente,
- Figur 8: eine Prinzipdarstellung einer erfindungsgemäßen Einrichtung einer zweiten Ausführungsform,
- Figur 9: eine Prinzipdarstellung einer erfindungsgemäßen Einrichtung einer dritten Ausführungsform,
- Figur 10: eine Prinzipdarstellung betreffend die Orientierung des Endlosbandes bei Auslegung der Einrichtung entsprechend Figur 8, und
- Figur 11: eine Prinzipdarstellung betreffend die Orientierung des Endlosbandes bei einer Ausgestaltung der Einrichtung gemäße Figur 2 oder Figur 9.

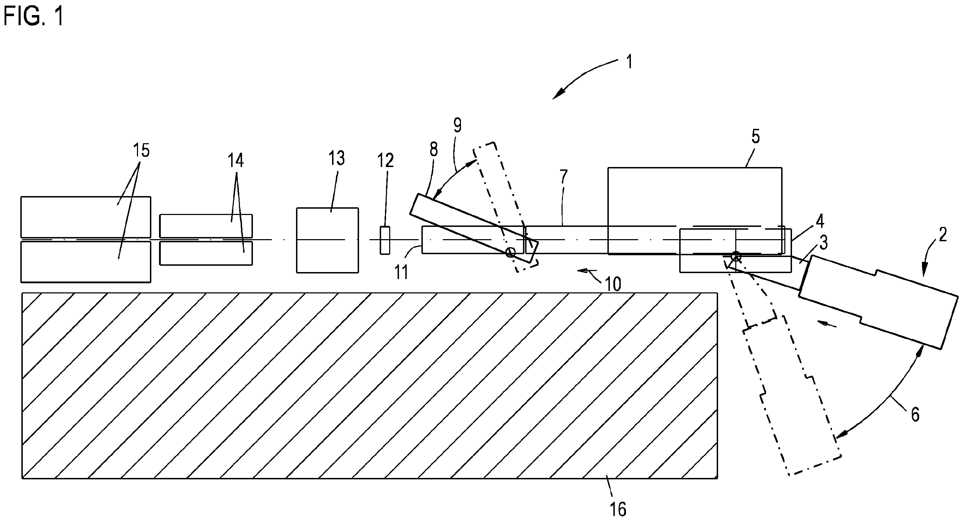

Figur 1 zeigt eine erfindungsgemäße Einrichtung 1 zur Bearbeitung eines klebrigen Cordbandes. Die Einrichtung 1 umfasst eine Abwickelvorrichtung 2, auf der in an sich bekannter Weise das zu bearbeitende Cordband auf einer Rolle aufgenommen ist, von der es abgewickelt wird. Die Abwickelvorrichtung 2 umfasst eine Materialunterstützung 3, längs welcher das abgewickelte Cordband zu einer Schneideinrichtung 4 mit zugeordneter Rückzugseinrichtung 5 transportiert wird. Mittels der Rückzugseinrichtung 5 wird in bekannter Weise die vorlaufende Kante des abgewickelten Bandes gegriffen und durch die Schneideinrichtung 4, die eine entsprechende Messereinrichtung, beispielsweise ein lineares Ober- und Untermesser aufweist, gezogen, und zwar so weit, wie die abzuschneidenden Bandabschnitte breit sein sollen.

Wie Figur 1 zeigt, ist die Abwickelvorrichtung 2 relativ zur Schneideinrichtung 4 verschwenkbar, wie durch den Doppelpfeil 6 angedeutet ist. Hierüber kann der Schneidwinkel, den die Schneideinrichtung 4 respektive deren Messereinrichtung relativ zur Bandlängsrichtung hat, eingestellt werden. Die Abwickelvorrichtung 2 wird also ersichtlich relativ weit zur Seite geschwenkt.

Der Schneideinrichtung 4 nachgeschaltet ist eine Transportstrecke 7, auf der die geschnittenen Bandabschnitte zu einer Spleißeinrichtung 8 transportiert werden. Diese ist ebenfalls, wie durch den Doppelpfeil 9 dargestellt, in einem Winkel relativ zur ersten Förderrichtung, die durch den Pfeil 10 dargestellt ist, verschwenkbar, wobei die Verschwenkung natürlich der Verschwenkung der Abwickelvorrichtung 2 erfolgt. In der Spleißeinrichtung 8 werden die in der Schneideinrichtung 4 zuvor geschnittenen Bandabschnitte entlang ihrer ungeschnittenen Seitenkanten wieder zusammengespleißt, um ein Endlosband zu bilden, das über eine weitere Transportstrecke 11, die der Spleißeinrichtung 8 nachgeschaltet ist respektive dieser zugehörig ist, transportiert wird.

Vorgesehen ist des Weiteren (optional) eine Beruhigungsrolle 12, die der Beruhigung des zuvor prozessierten Bandes dient. Dieser folgt, ebenfalls optional, ein Slitter 13, über den das Endlosband in zwei oder mehrere Teilbänder längsgetrennt werden kann.

Dem Slitter 13 folgen im gezeigten Beispiel zwei (optionale) Belegevorrichtungen 14, mit denen auf die geschnittenen Teilbänder entsprechende Bänder aufgelegt werden, um ein einfaches Aufwickeln in den nachgeschalteten Aufwickelvorrichtungen 15 zu ermöglichen.

Figur 1 zeigt eine übliche Ausgestaltung einer Einrichtung 1, wie sie im Stand der Technik konfiguriert ist. Ersichtlich sind, beginnend mit der Schneideinrichtung 4 und endend mit den Aufwickelvorrichtungen 15, alle Einrichtungskomponenten linear hintereinander angeordnet. Das heißt, dass die geschnittenen Bandabschnitte stets in ein und derselben Fördereinrichtung transportiert werden, die Einrichtung ist linear. Die geschnittenen Bandabschnitte werden stets in ein und derselben Fördereinrichtung transportiert.

Wie einleitend beschrieben ist die Abwickelvorrichtung zur Erstellung des Schneidwinkels zur Seite hin verschwenkbar, wie in Figur 1 dargestellt. Dies führt nun dazu, dass eine beachtlich große Fläche 16, die in Figur 1 gestrichelt dargestellt ist, letztlich ungenutzt bleibt, in ihr finden sich keine Einrichtungskomponenten. Auch baut in Folge des linearen Aufbaus die gesamte Einrichtung relativ lang auf.

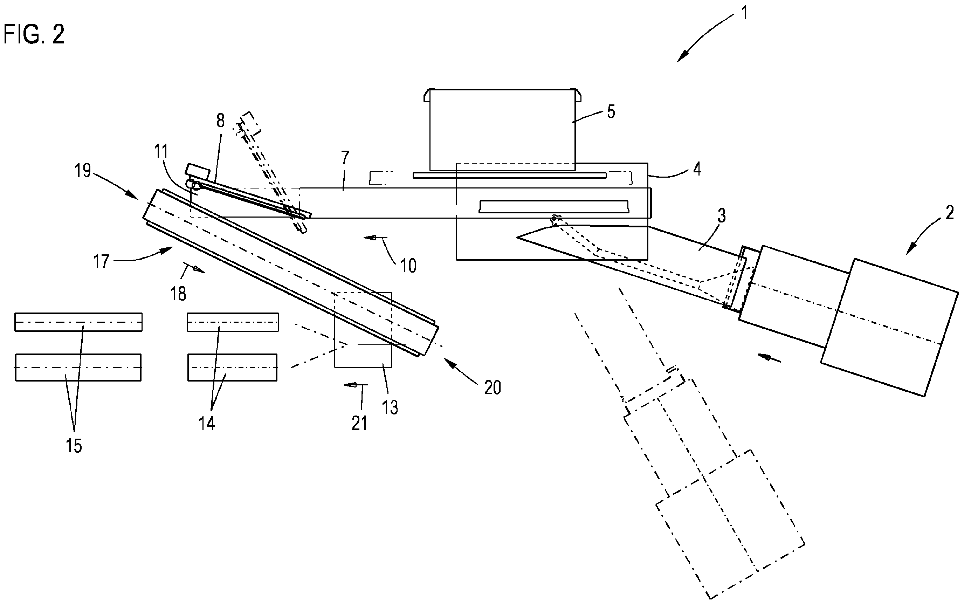

Figur 2 zeigt in Form einer Prinzipdarstellung eine erfindungsgemäße Einrichtung 1, wobei grundsätzlich für gleiche Bauteile gleiche Bezugszeichen verwendet werden.

Die Einrichtung 1 umfasst wiederum eine Abwickelvorrichtung 2, die im Winkel verschwenkbar ist, mit einer Materialunterstützung 3. Vorgesehen ist wiederum eine Schneideinrichtung 4 mit Rückzugseinrichtung 5 zum Schneiden von Bandabschnitten, die auf der Transportstrecke 7 zur Spleißeinrichtung 8 transportiert werden. Das gespleißte Endlosband wird auf der Transportstrecke 11 der Spleißeinrichtung 8 weitertransportiert.

Dieser Transportstrecke 11 folgt nun eine Bandumlenk- und -fördereinrichtung 17, mittels der das gespleißte Endlosband in eine zweite Förderrichtung 18, die unter einem Winkel größer 90° zur ersten Förderrichtung 10 steht, umgelenkt wird und auf dieser zweiten Förderrichtung 18 transportiert wird. Das Band wird, nachdem hier ein relativ großer Umlenkwinkel gezeigt ist, quasi zurückgefördert in Richtung der Abwickelvorrichtung 2. Am Einlauf der Bandumlenk- und -fördereinrichtung 17 ist folglich ein erster Umlenkpunkt 19 realisiert.

Am Ende der Bandumlenk- und -fördereinrichtung 17 ist ein zweiter Umlenkpunkt 20 realisiert. Der auch hier integrierte Slitter 13 ist nicht in linearer Anordnung zur zweiten Fördereinrichtung 17 angeordnet, sondern versetzt dazu positioniert, so dass das von der Bandumlenk- und -fördereinrichtung 17 ablaufende Endlosband im zweiten Umlenkpunkt 20 erneut umgelenkt wird und in den Slitter 13 läuft. Das erneut umgelenkte Endlosband wird nun einer dritten Förderrichtung 21, die exemplarisch parallel zur ersten Förderrichtung 10 ist, weiter transportiert und zu den beiden Belegevorrichtungen 14 und den beiden Aufwickelvorrichtungen 15 transportiert.

Ersichtlich ergibt sich ein wesentlicher kompakterer und kürzerer Aufbau der Einrichtung 1, nachdem sich mehrere Einrichtungskomponenten, im gezeigten Beispiel der Slitter 13, die Belegevorrichtungen 14 und die Aufwickelvorrichtungen 15 seitlich versetzt zu den vorgeschalteten Einrichtungskomponenten befinden, sie sind also aus der linearen Anordnung gemäß Figur 1 genommen und seitlich versetzt und zur Abwickelvorrichtung 2 zurückversetzt positioniert. Die Abwickelvorrichtung 2 kann nach wie vor im gewünschten Umfang verschwenkt werden, jedoch sind die entsprechenden Bandbearbeitungskomponenten näher an sie herangerückt. Ersichtlich nimmt auch die Länge der Einrichtung deutlich ab, eine Verkürzung um mehrere Meter, beispielsweise 5 - 6 m ist ohne weiteres möglich. Im gezeigten Beispiel befinden sich die Aufwickelvorrichtungen 15 axial gesehen nur kurz hinter dem Ende der Transportstrecke 11, während sie, siehe Figur 1, im Stand der Technik relativ weit davon beabstandet sind.

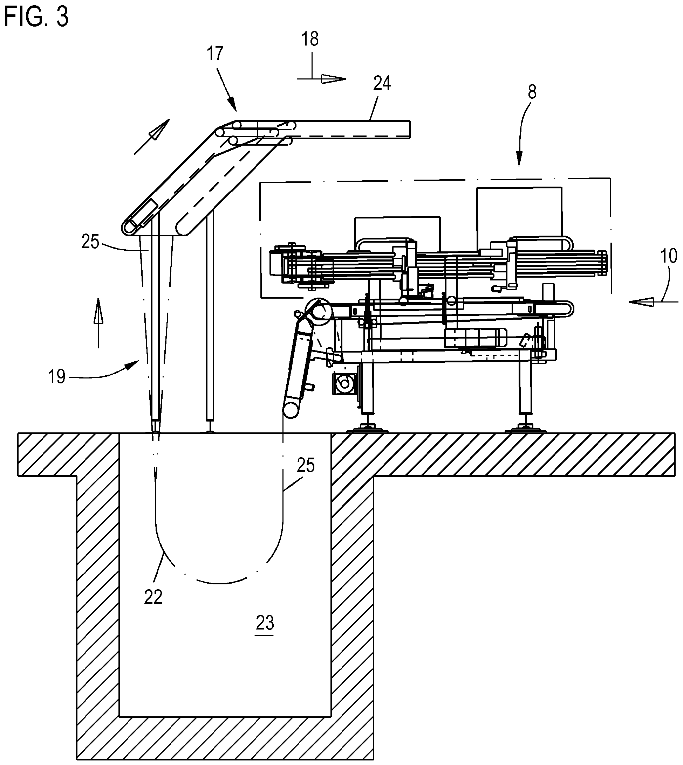

Figur 3 zeigt eine Teilansicht der Einrichtung 1 aus Figur 2 im Übergang von der Spleißeinrichtung 8 zur Bandumlenk- und -fördereinrichtung 17. Das hier gezeigte gespleißte Endlosband 22 läuft von der Spleißeinrichtung 8 in einen Bandspeicher 23, hier in Form einer Grube, in welchem Bandspeicher 23 das Endlosband frei hängt. Von dort aus läuft es auf die Bandumlenk- und -fördereinrichtung 17, die im gezeigten Beispiel als Endlostransportband 24 ausgeführt ist, worauf nachfolgend noch eingegangen wird. Da die zweite Förderrichtung 18, definiert über die Ausrichtung der Bandumlenk- und -fördereinrichtung 17, unter einem Winkel zur ersten Förderrichtung 10 steht, kommt es im ersten Umlenkpunkt 19 nicht nur zu einer Änderung der Förderrichtung, sondern auch zu einer Drehung des Endlosbandes 22 um seine Bandlängsachse, das heißt, dass das Endlosband 22 ausgekreuzt wird. Die vormalige Unterseite 25 des Endlosbandes 22 liegt auf dem Transportband 24 oben, bildet dann also die Oberseite, während die vormalige Oberseite die Unterseite bildet.

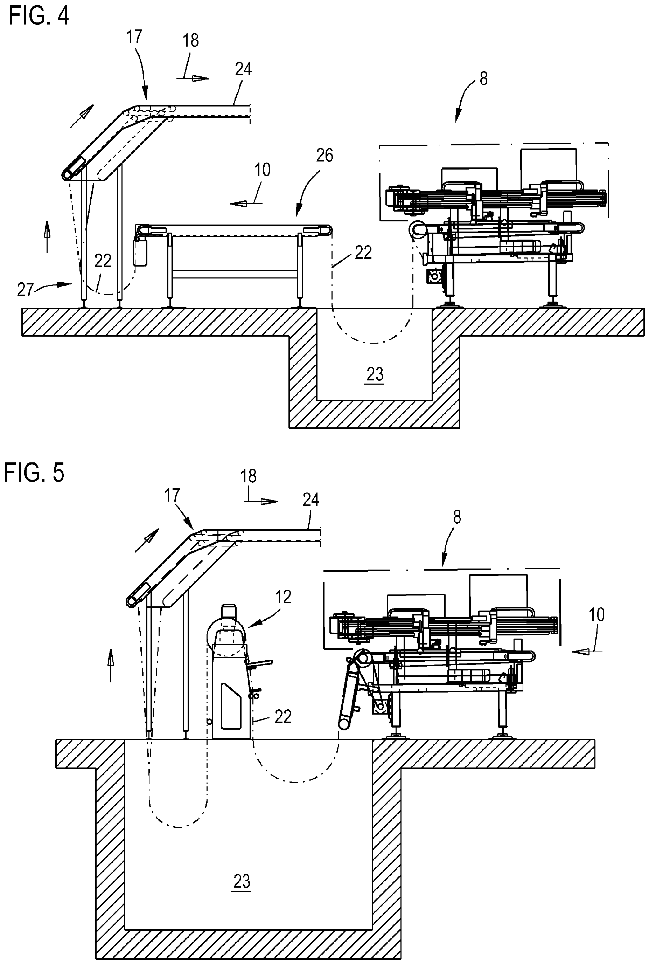

Figur 4 zeigt eine weitere Teilansicht einer Einrichtung 1, bei der zusätzlich zwischen Spleißeinrichtung 8 und Bandumlenk- und -fördereinrichtung 17 ein Reparaturband 26 integriert ist. Der Spleißeinrichtung 8 folgt wiederum ein Bandspeicher 23, der als Pufferspeicher dient. Aus diesem läuft das Endlosband 22 auf das Reparaturband 26 auf, wo manuelle Reparaturen vorgenommen werden können. Von diesem läuft es frei hängend, quasi wiederum eine Art Bandspeicher 27 bildend, auf das Transportband 24 der Bandumlenk- und - fördereinrichtung 17, wobei es wiederum ausgekreuzt wird, sich also die Bandorientierung ändert.

Figur 5 zeigt eine dritte Ausgestaltung im Übergangsbereich von der Spleißeinrichtung 8 zur Bandumlenk- und -fördereinrichtung 17. Der Spleißeinrichtung 8 nachgeschaltet ist eine Beruhigungsrolle 12, auf die das Endlosband 22, aus dem Bandspeicher 23 kommend, aufläuft. Das Endlosband 22 läuft von der Beruhigungsrolle 12 wiederum in den Bandspeicher 23, bildet also erneut eine freihängende Schlaufe, bevor es auf das Transportband 24 der Bandumlenk- und -fördereinrichtung 17 aufläuft, wobei es ausgekreuzt wird.

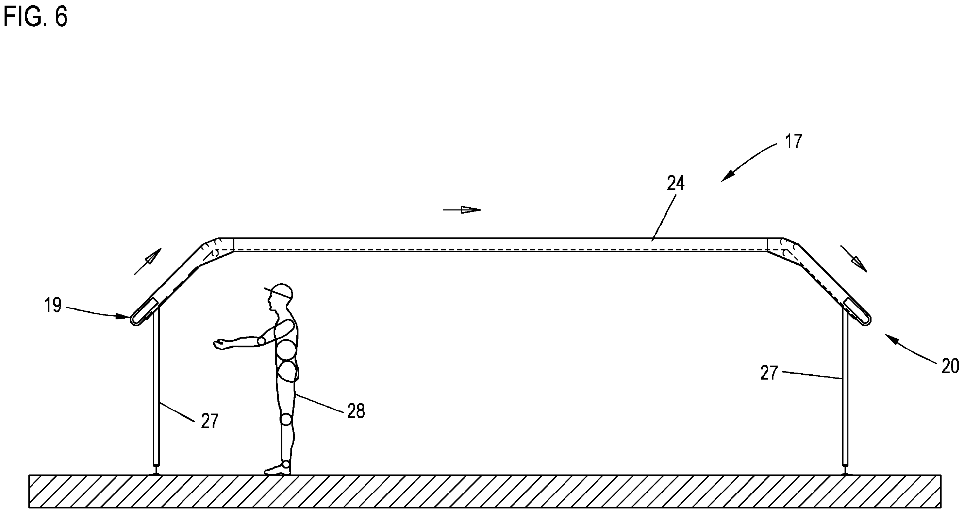

Figur 6 zeigt in einer Seitenansicht die Bandumlenk- und -fördereinrichtung 17 in Form eines endlosen Transportbandes 24. Das Transportband 24 ist beispielsweise über Rollen geführt und weist einen nicht näher gezeigten Antrieb auf, so dass es das Endlosband aktiv fördert. Am Einlauf des Transportbandes 24 ist der erste Umlenkpunkt 19 realisiert, am Auslauf der zweite Umlenkpunkt 20. Ersichtlich ist das Transportband 24 erhöht positioniert. Es ruht auf entsprechenden Trägern 27, so dass ohne weiteres eine Person 28 unter dem Transportband 24 zu Wartungszwecken hindurchgehen kann.

Anstelle eines Endlostransportbandes 24 wäre auch eine Ausgestaltung als Rollengang denkbar, wobei die Rollen über entsprechende Riemen gekoppelt sind und eine oder mehrere Rollen über eine Antriebseinrichtung aktiv angetrieben sind.

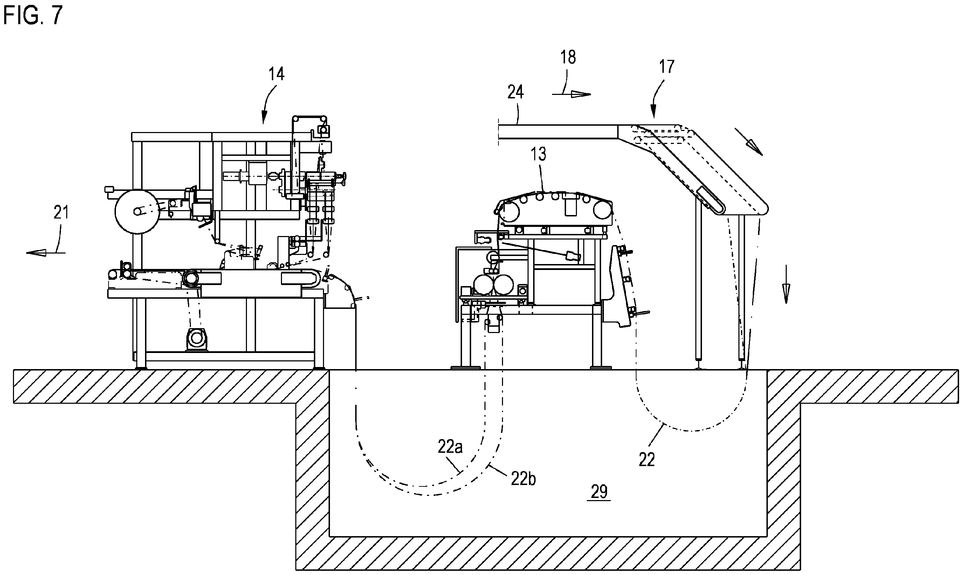

Figur 7 zeigt einen Ausschnitt aus der Einrichtung 1 im Bereich des Übergangs von der Bandumlenk- und -fördereinrichtung 17, also dem Endlostransportband 24 zum Slitter 13. Das Endlosband 22 läuft am Ausgang des Endlosbandes 22, also im Bereich des zweiten Umlenkpunktes 20 in einen weiteren Bandspeicher 29 ein, hier wiederum gebildet über eine Grube. Es bildet dort eine Materialschlaufe, die auf den Slitter 13 läuft. Hierbei kommt es zu einem erneuten Auskreuzen, also zu einem erneuten Wechsel der Bandorientierung, das Band wird erneut um die Längsachse um 180° gedreht, so dass die vormalige Oberseite wieder die Unterseite wird. Das Endlosband 22 wird nun in der dritten Förderrichtung 21 transportiert, die, siehe Figur 2, bevorzugt parallel zur ersten Förderrichtung 10 ist.

Vom Slitter 13 laufen die hier gezeigten beiden Teilbänder 22a, 22b zu den nachgeschalteten Belegevorrichtungen 14, und von diesen zu den hier nicht näher gezeigten Aufwickelvorrichtungen 15.

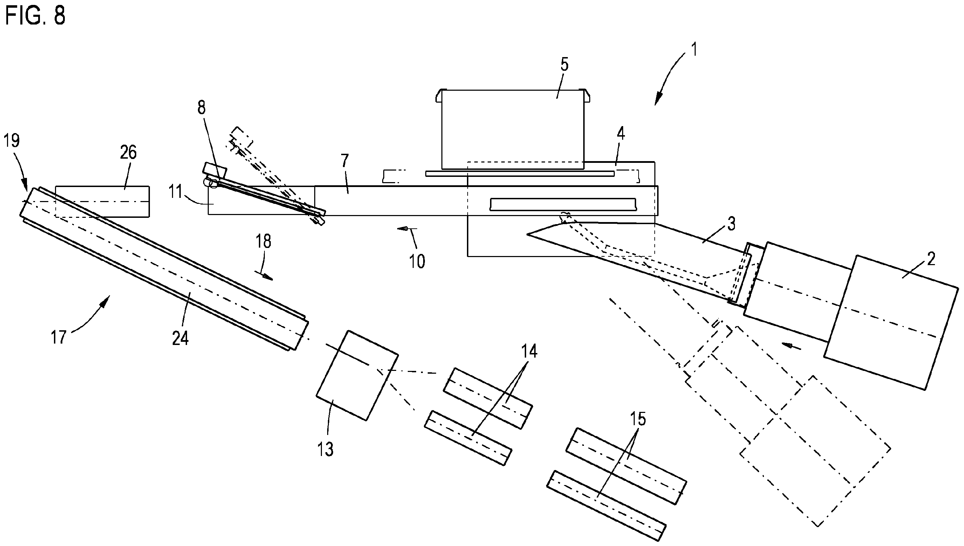

Figur 8 zeigt in Form einer Prinzipdarstellung eine weitere erfindungsgemäße Ausgestaltung einer Einrichtung 1. Diese umfasst die Abwickelvorrichtung 2 nebst Materialunterstützung 3, die Schneideinrichtung 4 nebst Rückzugseinrichtung 5, die Transportstrecke 7, die Spleißeinrichtung 8 sowie die Transportstrecke 11. Exemplarisch hier als weitere Bandbearbeitungseinrichtung ein Reparaturband 26 gezeigt. Diesem nachgeschaltet ist die Bandumlenk- und -fördereinrichtung 17, beispielsweise wiederum in Form eines Transportbandes 24. Über dieses wird wie beschrieben das gespleißte Endlosband in der zweiten Förderrichtung 18 transportiert. Linear in dieser Förderrichtung sind nun die nachgeschalteten Bearbeitungseinrichtungen angeordnet, hier wiederum exemplarisch der Slitter 13, die Belegevorrichtungen 14 und die Aufwickelvorrichtungen 15. Es findet sich also nur eine einmalige Umlenkung am Umlenkpunkt 19 statt, von dort aus ist ein linearer Komponentenaufbau gegeben.

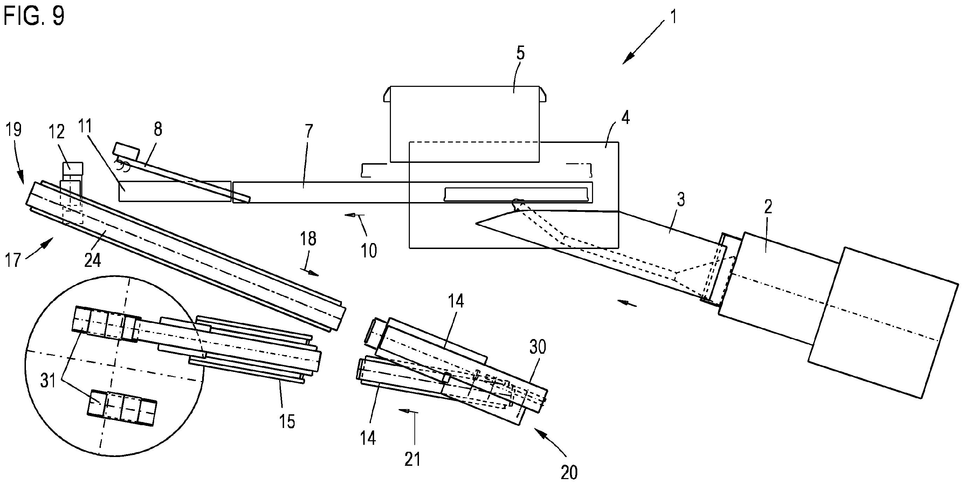

Eine dritte erfindungsgemäße Ausgestaltung einer Einrichtung 1 ist in Figur 9 gezeigt. Die Einrichtung 1 umfasst wiederum eine Abwickelvorrichtung 2, eine Materialunterstützung 3 und eine Schneideinrichtung 4 nebst Rückzugseinrichtung 5, eine Transportstrecke 7, eine Spleißeinrichtung 8 sowie eine Transportstrecke 11, der hier exemplarisch als Bandbearbeitungseinrichtung eine Beruhigungsrolle 12 nachgeschaltet ist.

Der Beruhigungsrolle 12 nachgeschaltet ist wiederum die Bandumlenk- und - fördereinrichtung 17, das heißt, dass das gespleißte Endlosband von der Beruhigungsrolle 12 im ersten Umlenkpunkt 19 umgelenkt auf das Transportband 24 läuft. In der zweiten Förderrichtung 18 der Bandumlenk- und -fördereinrichtung 17 nachgeschaltet ist eine Belegevorrichtung 14 mit zugehöriger Transporteinrichtung 30, an deren Ende der zweite Umlenkpunkt 20 realisiert ist. Diese Transporteinrichtung 30, z. B. ein Transportband, bildet quasi eine zweite Bandumlenk- und
-fördereinrichtung. Denn das von der Transporteinrichtung 30 ablaufende, belegte Endlosband läuft in einen hier nicht näher gezeigten Bandspeicher respektive liegt soweit frei, dass es unter Auskreuzen auf eine zweite Belegevorrichtung 14, die in der dritten Förderrichtung 21 ausgerichtet ist, auflaufen kann. In der ersten Belegevorrichtung 14, die in der zweiten Förderrichtung 18 angeordnet ist, wird die Oberseite des Endlosbandes belegt. Diese Oberseite ist die originäre Unterseite, da ein Orientierungswechsel am ersten Umlenkpunkt 19 erfolgt. In der zweiten Belegevorrichtung 14 wird nun die originäre Oberseite belegt, nachdem im Umlenkpunkt 20 ein erneuter Orientierungswechsel stattgefunden hat. Die beiden Belegevorrichtungen 14 belegen also unterschiedliche Seiten, jedoch jeweils von oben, was das Belegen deutlich vereinfacht.

In der dritten Fördereinrichtung 21 der zweiten Belegevorrichtung 14 folgend ist die Aufwickelvorrichtung 15 angeordnet. Hier ist nur eine Aufwickelvorrichtung 15 vorzusehen, nachdem bei dieser Ausgestaltung kein Slitter vorgesehen ist. Die Aufwickelvorrichtung 15 kann hier exemplarisch zwei austauschbare Wickeleinrichtungen 31 aufweisen.

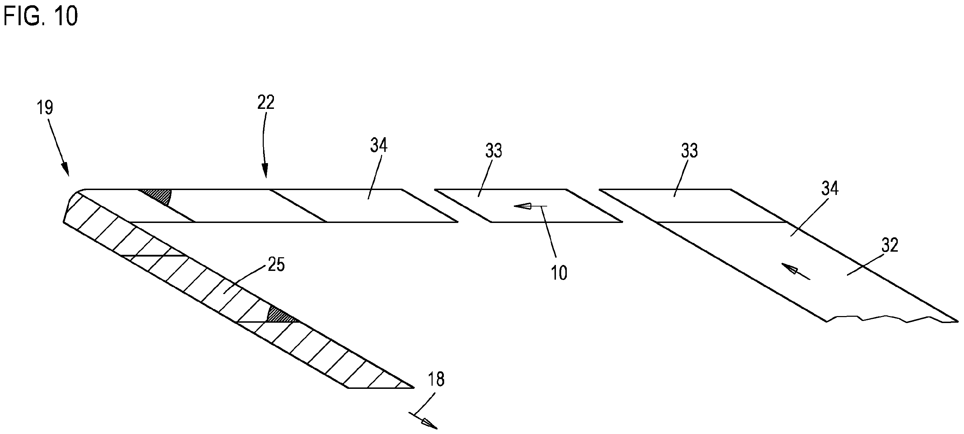

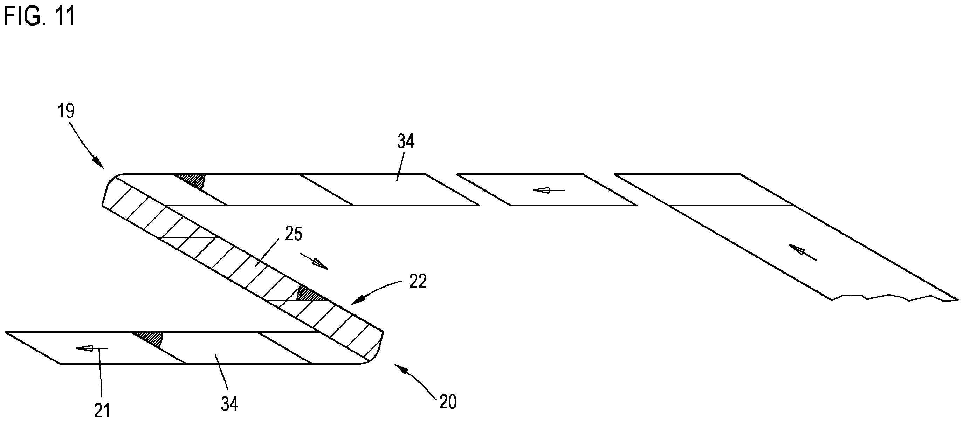

Die Figuren 10 und 11 zeigen zwei Darstellungen, an denen die jeweilige Orientierung des Bandes ersichtlich ist. Gezeigt ist das über die Abwickelvorrichtung 2 zugeführte, zu verarbeitende Band 32, von dem in der Schneideinrichtung 4 Bandabschnitte 33 geschnitten werden, die über die Transporteinrichtung 7 zur Spleißeinrichtung 8 transportiert werden, wo die Bandabschnitte 33 zur Bildung des Endlosbandes 22 verspleißt werden. Die Oberseite 34 des Bandes 32 liegt auch am Endlosband 22 nach wie vor oben. Im Umlenkpunkt 19 kommt es nun zu einer Umlenkung und damit einer Orientierungsänderung des Endlosbandes 22 um seine Längsachse. Nach dem Umlenkpunkt 19 liegt die Unterseite 25 des Endlosbandes 22 oben. Bei dieser Orientierung bleibt es, wenn das Band weiterhin in der zweiten Förderrichtung 18 transportiert wird und es zu keiner weiteren Umlenkung kommt.

Figur 11 zeigt eine Situation, in der eine zweite Umlenkung im Umlenkpunkt 20 erfolgt. Die Unterseite 25, die aufgrund der Umlenkung im ersten Umlenkpunkt 19 zu oberst liegt, wird nun aufgrund der Drehung des Bandes erneut nach unten gewendet, die Oberseite 34 liegt wieder zu oberst. Das Endlosband 22 wird nun weiter in Richtung der dritten Förderrichtung 21 transportiert, wo es nachfolgend prozessiert wird.

Die beschriebenen Ausführungsbeispiele sind lediglich exemplarischer Natur, sowohl was die konkreten Umlenkwinkel respektive die Förderrichtungen relativ zueinander angeht, als auch die Anordnung der Bandbearbeitungseinrichtungen vor und nach der Bandumlenk- und -fördereinrichtung 17 respektive dem ersten Umlenkpunkt 19 und gegebenenfalls den zweiten Umlenkpunkt 20. Es können Bandbearbeitungseinrichtungen weggelassen werden, wie beispielsweise der Slitter und/oder die Belegevorrichtung und/oder das Reparaturband und/oder die Beruhigungsrolle, es können aber auch zusätzliche Bandbearbeitungseinrichtungen integriert werden, je nach gegebener Aufgabenstellung. Auch ist ein spiegelbildlicher Aufbau der Einrichtung selbstverständlich möglich.

## Patentansprüche

1. Einrichtung zur Bearbeitung eines klebrigen Bandes, insbesondere eines Stahl- oder Textilcordbandes, umfassend
- eine Abwickelvorrichtung (2) zum Abwickeln des auf eine Rolle gewickelten Bandes,
- eine dieser nachgeschaltete Schneideinrichtung (4) zum Schneiden einzelner Bandabschnitte (33), in die das von der Abwickelvorrichtung (2) kommende Band (32) gefördert wird, wobei zur Veränderung des Schneidwinkels die Abwickelvorrichtung (2) relativ zur Schneideinrichtung (4) verschwenkbar ist,
- eine der Schneideinrichtung (4) nachgeschaltete Transportstrecke (7),
- eine der Transportstrecke (7) nachgeschaltete Spleißeinrichtung (8) zum Verspleißen der von der Schneideinrichtung (4) über die Transportstrecke (7) herangeförderten Bandabschnitte (33) zur Bildung eines Endlosbandes (22),
- eine der Spleißeinrichtung (8) nachgeschaltete Transportstrecke (11),
- sowie wenigstens eine Bandbearbeitungseinrichtung (12, 13, 14, 15) zum weiteren Bearbeiten des Endlosbandes (22),
- wobei die Förderrichtung (10) beider Transportstrecken (7, 11) dieselbe ist,
**dadurch gekennzeichnet, dass** wenigstens eine der wenigstens einen Bandbearbeitungseinrichtung (13, 14, 15) vorgeschaltete Bandumlenk-und -fördereinrichtung (17) vorgesehen ist, in der das Endlosband (22) in eine zweite Förderrichtung (18), die - bezogen auf die Horizontalebene - unter einem Winkel von wenigstens 90° zur Förderrichtung (10) der beiden Transportstrecken (7, 11) steht, umlenkbar und in der zweiten Förderrichtung (18) transportierbar ist, wobei die Bandumlenk- und -fördereinrichtung (17) als eine in die zweite Förderrichtung (18) fördernde Transportstrecke in Form eines umlaufenden Endlosförderbandes (25) ausgebildet ist oder eine solche umfasst, die unter einem Winkel zur ersten Förderrichtung (10) angeordnet ist.

2. Einrichtung nach Anspruch 1, **dadurch gekennzeichnet, dass** die Bandumlenk- und -fördereinrichtung (17) zum Umlenken des Endlosbandes (22) derart ausgebildet ist, dass das Endlosband (22) sowohl hinsichtlich der Förderrichtung umgelenkt als auch um 180° um die Bandlängsachse gedreht wird.

3. Einrichtung nach einem der vorangehenden Ansprüche, **dadurch gekennzeichnet, dass** das Endlosband (22) aus einem Bandspeicher (23) frei hängend auf die Bandumlenk- und -fördereinrichtung (17) einläuft.

4. Einrichtung nach einem der vorangehenden Ansprüche, **dadurch gekennzeichnet, dass** die Bandumlenk- und -fördereinrichtung (17) erhöht relativ zu den vorgeschalteten Transportstrecken (7, 11) angeordnet ist.

5. Einrichtung nach einem der vorangehenden Ansprüche, **dadurch gekennzeichnet, dass** die zweite Förderrichtung (18) unter einem Winkel zwischen 90° - 145° zur ersten Förderrichtung (10) steht.

6. Einrichtung nach einem der vorangehenden Ansprüche, **dadurch gekennzeichnet, dass** die wenigstens eine Bandbearbeitungseinrichtung (13, 14, 15) direkt der Bandumlenk- und -fördereinrichtung (17) nachgeschaltet ist.

7. Einrichtung nach einem der Ansprüche 1 bis 5, **dadurch gekennzeichnet, dass** die wenigstens eine Bandbearbeitungseinrichtung (13, 14, 15) derart versetzt zur zweiten Förderrichtung (18) angeordnet ist, dass das auf der Bandumlenk- und -fördereinrichtung (17) geförderte Endlosband (22) in eine vorzugsweise parallel zur ersten Förderrichtung (10) verlaufende dritte Förderrichtung (21) umzulenken ist.

8. Einrichtung nach einem der Ansprüche 1 bis 5, **dadurch gekennzeichnet, dass** der linear in der zweiten Förderrichtung (18) angeordneten wenigstens einen Bandbearbeitungseinrichtung (14) eine zweite Bandumlenk- und - fördereinrichtung nachgeschaltet ist, über die das Endlosband (22) in eine vorzugsweise parallel zur ersten Förderrichtung (10) verlaufende dritte Förderrichtung (21), in der linear wenigstens eine weitere Bandbearbeitungseinrichtung (14, 15) angeordnet ist, umlenkbar ist.

9. Einrichtung nach Anspruch 7 oder 8, **dadurch gekennzeichnet, dass** ein Bandspeicher (23) vorgesehen ist, in den das Endlosband (22) vor der versetzt angeordneten Bandbearbeitungseinrichtung (14, 15) frei hängend einläuft und aus dem es umgelenkt zur Bandbearbeitungseinrichtung (14, 15) läuft.

10. Einrichtung nach Anspruch 8 und 9, **dadurch gekennzeichnet, dass** die zweite Bandumlenk- und -fördereinrichtung erhöht relativ zu den vorgeschalteten, in der ersten Förderrichtung (10) liegenden Transportstrecken (7, 11) angeordnet ist.

11. Einrichtung nach einem der Ansprüche 7 bis 10, **dadurch gekennzeichnet, dass** die Bandbearbeitungseinrichtung (14, 15) derart angeordnet ist, dass das Endlosband (22) sowohl hinsichtlich der Förderrichtung umzulenken als auch um 180° um die Bandlängsachse zu drehen ist.

12. Einrichtung nach einem der vorangehenden Ansprüche, **dadurch gekennzeichnet, dass** als Bandbearbeitungseinrichtung oder als weitere Bandbearbeitungseinrichtung eine das Endlosband (22) aufwickelnde Aufwickelvorrichtung (15) vorgesehen ist.

13. Einrichtung nach einem der vorangehenden Ansprüche, **dadurch gekennzeichnet, dass** als Bandbearbeitungseinrichtung oder als weitere Bandbearbeitungseinrichtung wenigstens eine Belegeinrichtung (14) zum Aufbringen eines oder mehrerer Belegestreifen auf eine Seite des Endlosbandes (22) vorgesehen ist.

14. Einrichtung nach einem der vorangehenden Ansprüche, **dadurch gekennzeichnet, dass** als Bandbearbeitungseinrichtung oder als weitere Bandbearbeitungseinrichtung wenigstens ein Slitter (13) zum Längsteilen des Endlosbandes (22) in wenigstens zwei Endlosbandabschnitte (22a, 22b) vorgesehen ist.

## Claims

1. Installation for processing an adhesive strip, in particular a steel or a textile cord strip, comprising
- an unwinding device (2) for unwinding the strip that is wound on a roll;
- a cutting installation (4), downstream of said unwinding device (2), for cutting individual strip portions (33), the strip (32) emanating from the unwinding device (2) being conveyed into said cutting installation (4), wherein the unwinding device (2) for modifying the cutting angle is pivotable relative to the cutting installation (4);
- a transport section (7) that is downstream of the cutting installation (4);
- a splicing installation (8), downstream of the transport section (7), for splicing the strip portions (33) that are conveyed from the cutting installation (4) by way of the transport section (7), in order for a continuous strip (22) to be formed;
- a transport section (11), downstream of the splicing installation (8); and
- at least one strip processing installation (12, 13, 14, 15) for further processing of the continuous strip (22);
- wherein the conveying direction (10) of both transport sections (7, 11) is identical,
**characterized in that**
at least one strip deflection and conveyor installation (17) is provided so as to be upstream of the at least one strip processing installation (13, 14, 15), the continuous strip (22) in said strip deflection and conveyor installation (17) being deflectable to a second conveying direction (18) and transportable in a second conveying direction (18) which - in relation to the horizontal plane - is at an angle of at least 90° to the conveying direction (10) of the two transport sections (7, 11), wherein the strip deflection and conveyor installation (17) is configured as a transport section in the form of a revolving continuous conveyor belt (25) that conveys in the second conveying direction (18), or comprises one of such type, which is disposed at an angle in relation to the first conveying direction (10).

2. Installation according to Claim 1, **characterized in that** the strip deflection and conveyor installation (17) is configured for deflecting the continuous strip (22) in such a manner that the continuous strip (22) is deflected both in terms of the conveying direction as well as rotated by 180° about the longitudinal axis of the strip.

3. Installation according to one of the preceding claims, **characterized in that** the continuous strip (22) in a freely suspended manner runs in from a strip accumulator (23) onto the strip deflection and conveyor installation (17).

4. Installation according to one of the preceding claims, **characterized in that** the strip deflection and conveyor installation (17) is disposed so as to be elevated in relation to the upstream transport sections (7, 11).

5. Installation according to one of the preceding claims, **characterized in that** the second conveying direction (18) is at an angle between 90° and 145° in relation to the first conveying direction (10).

6. Installation according to one of the preceding claims, **characterized in that** the at least one strip processing installation (13, 14, 15) is directly downstream of the strip deflection and conveyor installation (17).

7. Installation according to one of Claims 1 to 5, **characterized in that** the at least one strip processing installation (13, 14, 15) is disposed so as to be offset to the second conveying direction (18) in such a manner that the continuous strip (22) that is conveyed on the strip deflection and conveyor installation (17) is to be deflected to a third conveying direction (21) that preferably runs parallel with the first conveying direction (10).

8. Installation according to one of Claims 1 to 5, **characterized in that** a second strip deflection and conveyor installation is downstream of the at least one strip processing installation (14) which is disposed in a linear manner in the second conveying direction (18), the continuous strip (22) by way of said second strip deflection and conveyor installation being deflectable to a third conveying direction (21) that preferably runs parallel with the first conveying direction (10), at least one further strip processing installation (14, 15) being disposed in a linear manner in said third conveying direction (21).

9. Installation according to either of Claims 7 and 8, **characterized in that** a strip accumulator (23) is provided into which the continuous strip (22) ahead of the strip processing installation (14, 15) which is disposed in an offset manner runs in a freely suspended manner, and from which said continuous strip (22) runs so as to be deflected to the strip processing installation (14, 15).

10. Installation according to Claims 8 and 9, **characterized in that** the second strip deflection and conveyor installation is disposed so as to be elevated in relation to the upstream transport sections (7, 11) that lie in the first conveying direction (10).

11. Installation according to one of Claims 7 to 10, **characterized in that** the strip processing installation (14, 15) is disposed in such a manner that the continuous strip (22) is to be deflected both in terms of the conveying direction as well as rotated by 180° about the longitudinal axis of the strip.

12. Installation according to one of the preceding claims, **characterized in that** a winding device (15) that winds the continuous strip (22) is provided as the strip processing installation or as a further strip processing installation.

13. Installation according to one of the preceding claims, **characterized in that** at least one finishing installation (14) for applying one or a plurality of finishes to one side of the continuous strip (22)is provided as the strip processing installation or as a further strip processing installation.

14. Installation according to one of the preceding claims, **characterized in that** at least one slitter (13) for longitudinally separating the continuous strip (22) into at least two continuous strip portions (22a, 22b) is provided as the strip processing installation or as a further strip processing installation.

## Revendications

1. Dispositif pour le traitement d'une bande adhésive, en particulier d'une bande en câbles d'acier ou de textile, comprenant
- un dispositif de déroulement (2) pour dérouler la bande enroulée sur un rouleau,
- un dispositif de coupe (4) monté en aval de celui-ci pour découper des sections de bande individuelles (33) dans lesquelles la bande (32) provenant du dispositif de déroulement (2) est transportée, le dispositif de déroulement (2) pouvant pivoter par rapport au dispositif de coupe (4) pour modifier l'angle de coupe,
- une section de transport (7) montée en aval du dispositif de coupe (4),
- un dispositif d'épissurage (8) monté en aval de la section de transport (7), pour épissurer les sections de bande (33) transportées depuis le dispositif de coupe (4) par le biais de la section de transport (7) pour former une bande sans fin (22),
- une section de transport (11) montée en aval du dispositif d'épissurage (8),
- ainsi qu'au moins un dispositif de traitement de bande (12, 13, 14, 15) pour le traitement supplémentaire de la bande sans fin (22),
- le dispositif de transport (10) des deux sections de transport (7, 11) étant le même,
**caractérisé en ce que** qu'au moins un dispositif de déviation et de transport de bande (17) monté en amont de l'au moins un dispositif de traitement de bande (13, 14 15) est prévu, dans lequel la bande sans fin (22) peut être déviée dans une deuxième direction de transport (18) qui, par rapport au plan horizontal, est inclinée suivant un angle d'au moins 90° par rapport à la section de transport (10) des deux sections de transport (7, 11), et peut être transportée dans la deuxième direction de transport (18), le dispositif de déviation et de transport de bande (17) étant réalisé sous forme de section de transport sous la forme d'une bande de transport sans fin (25) transportant dans la deuxième direction de transport (18), ou comprenant une telle bande, qui est disposée suivant un certain angle par rapport à la première direction de transport (10).

2. Dispositif selon la revendication 1, **caractérisé en ce que** le dispositif de déviation et de transport de bande (17) est réalisé pour dévier la bande sans fin (22) de telle sorte que la bande sans fin (22) soit déviée à la fois par rapport à la direction de transport et soit également tournée de 180° autour de l'axe longitudinal de la bande.

3. Dispositif selon l'une quelconque des revendications précédentes, **caractérisé en ce que** la bande sans fin (22) entre de manière suspendue librement sur le dispositif de déviation et de transport de bande (17) à partir d'un stock de bande (23).

4. Dispositif selon l'une quelconque des revendications précédentes, **caractérisé en ce que** le dispositif de déviation et de transport de bande (17) est disposé de manière rehaussée par rapport aux sections de transport montées en amont (7, 11).

5. Dispositif selon l'une quelconque des revendications précédentes, **caractérisé en ce que** la deuxième direction de transport (18) est tournée d'un angle compris entre 90° et 145° par rapport à la première direction de transport (10).

6. Dispositif selon l'une quelconque des revendications précédentes, **caractérisé en ce que** l'au moins un dispositif de traitement de bande (13, 14, 15) est monté directement en aval du dispositif de déviation et de transport de bande (17).

7. Dispositif selon l'une quelconque des revendications 1 à 5, **caractérisé en ce que** l'au moins un dispositif de traitement de bande (13, 14, 15) est disposé de manière décalée par rapport à la deuxième direction de transport (18) de telle sorte que la bande sans fin (22) transportée sur le dispositif de déviation et de transport de bande (17) puisse être déviée dans une troisième direction de transport (21) s'étendant de préférence parallèlement à la première direction de transport (10).

8. Dispositif selon l'une quelconque des revendications 1 à 5, **caractérisé en ce qu'**un deuxième dispositif de déviation et de transport de bande est monté en aval de l'au moins un dispositif de traitement de bande (14) disposé linéairement dans la deuxième direction de transport (18), par le biais duquel la bande sans fin (22) peut être déviée dans une troisième direction de transport (21) s'étendant de préférence parallèlement à la première direction de transport (10), dans laquelle est disposé linéairement au moins un dispositif de traitement de bande supplémentaire (14, 15).

9. Dispositif selon la revendication 7 ou 8, **caractérisé en ce qu'**un stock de bande (23) est prévu, dans lequel la bande sans fin (22) entre de manière suspendue librement devant le dispositif de traitement de bande (14, 15) disposé de manière décalée, et hors duquel elle s'étend de manière déviée vers le dispositif de traitement de bande (14, 15).

10. Dispositif selon les revendications 8 et 9, **caractérisé en ce que** le deuxième dispositif de déviation et de transport de bande est disposé de manière rehaussée par rapport aux sections de transport (7, 11) disposées en amont, situées dans la première direction de transport (10).

11. Dispositif selon l'une quelconque des revendications 7 à 10, **caractérisé en ce que** le dispositif de traitement de bande (14, 15) est disposé de telle sorte que la bande sans fin (22) puisse être déviée par rapport à la direction de transport et puisse aussi être tournée de 180° autour de l'axe longitudinal de la bande.

12. Dispositif selon l'une quelconque des revendications précédentes, **caractérisé en ce que** l'on prévoit en tant que dispositif de traitement de bande ou en tant que dispositif de traitement de bande supplémentaire un dispositif d'enroulement (15) enroulant la bande sans fin (22).

13. Dispositif selon l'une quelconque des revendications précédentes, **caractérisé en ce que** l'on prévoit en tant que dispositif de traitement de bande ou en tant que dispositif de traitement de bande supplémentaire au moins un dispositif d'application (14) pour appliquer une ou plusieurs bandes d'application sur un côté de la bande sans fin (22).

14. Dispositif selon l'une quelconque des revendications précédentes, **caractérisé en ce que** l'on prévoit en tant que dispositif de traitement de bande ou en tant que dispositif de traitement de bande supplémentaire au moins une découpeuse (13) pour diviser longitudinalement la bande sans fin (22) en au moins deux portions de bande sans fin (22a, 22b).
